(19) Europäisches Patentamt
European Patent Office
Office européen des brevets

(11) **EP 3 096 243 A1**

(12) **EUROPEAN PATENT APPLICATION**

(43) Date of publication:
**23.11.2016 Bulletin 2016/47**

(51) Int Cl.:
*G06F 17/30* (2006.01)     *G06K 9/62* (2006.01)

(21) Application number: **15305780.7**

(22) Date of filing: **22.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **ZEPEDA SALVATIERRA, Joaquin
  35576 Cesson-Sévigné (FR)**
• **BABON, Frédéric
  35576 Cesson-Sévigné (FR)**

(74) Representative: **Huchet, Anne et al
TECHNICOLOR
1-5, rue Jeanne d'Arc
92130 Issy-les-Moulineaux (FR)**

(54) **METHODS, SYSTEMS AND APPARATUS FOR AUTOMATIC VIDEO QUERY EXPANSION**

(57)     The present principles provide methods and systems for searching a plurality of videos, including determing a first classifier based on a search query, a first scored plurality of videos based on the first classifier and a plurality of videos; determining at least a second plurality of features based on the first scored plurality of videos; determining at least a second classifier; determining a fused classifier based on the first classifier and the at least a second classifier; determining a second scored plurality of videos based on the fused classifier and the plurality of videos; where the first plurality of features are determined based on a first search utilizing the search query, the first plurality of features are each of a first type video feature and the at least second plurality of features are each of at least a second type video features; wherein the first type video feature is different than the at least a second type of video feature.

FIGURE 5

EP 3 096 243 A1

## Description

## TECHNICAL FIELD

The present disclosure relates to video searching. More precisely, the present disclosure relates to video searching based on extended set(s) of video features.

## BACKGROUND

Various computer or machine based applications offer the ability to search images or videos. Image and video searching are relevant in many fields, including the fields of computer vision, object recognition, video tracking, video-based location determination/mapping, video surveillance, video classification, video editing and video content retrieval.

Some image and video search techniques rely on semantic search techniques. Semantic searches are based on the input of a visual concept (e.g., a cat). The input may be visual (e.g., of an image of a cat), textual (e.g., the word "cat") or otherwise (e.g., an audio file converted to text). The semantic search retrieves a positive set of images containing the visual concept (e.g., images of cats), and a negative set of images not containing the visual concept (e.g., images that do not contain cats, such as images of dogs, other animals, or no animals). The semantic search determines image feature vectors for the images, and provides the image feature vectors of the positive and negative sets of images to a classifier learning algorithm.

Image features may be extracted as photometric features with or without local descriptors. Local descriptors can be utilized in order to map an image to an image feature vector(s). To extract local image descriptors from the input image, the input image may be divided into image patches. A local descriptor may be computed for each image patch, resulting in a local descriptor vector (e.g., a SIFT vector $x_i$) for each image patch. The local descriptors for an input image may be encoded into a fixed-dimension image feature vector using a local descriptor encoder such as a bag-of-words encoder, a Fisher Encoder or a VLAD encoder. Thus, the input image of dimensions NxM is mapped to an image feature vector of constant dimension D.

Alternatively, image features may be determined without the use of local descriptors. For example, image features may be determined based on histograms of colors or gradients, GIST features, features consisting of concatenating activation features from deep convolutional neural networks, or any other image feature technique.

In a semantic search, the image feature vectors of the positive and negative sets of images are provided to a classifier learning algorithm. A classifier learning algorithm is generally a function that determines an image classifier. The classifier learning algorithm determines the relevant semantic content of visual media based on training sets of positive images and negative images using a learning algorithm, such as an SVM algorithm. The result of the learning algorithm may be a linear classifier that defines a separating hyperplane in the space of image feature vectors. The classifier learning algorithm, e.g., SVM algorithm, may determine a vector *w* and offset *b*.

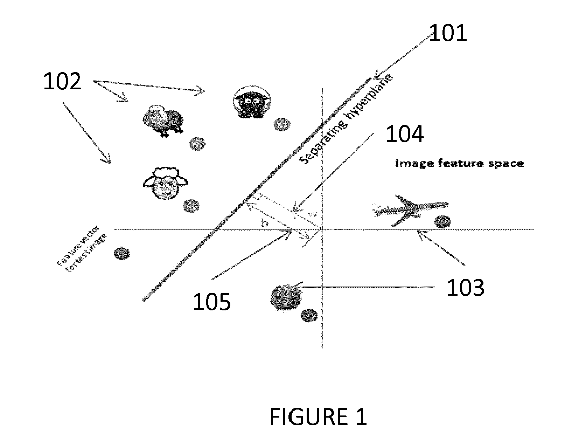

Fig. 1 illustrates a learned classifier 101 that provides a classification, (e.g., a separation), of image feature vectors, such as high dimensional vectors (e.g., histograms) extracted from the image. The classifier 101 defines a separating hyperplane that separates positive image features 102 from negative image features 103. The classifier 101 may further be defined based on vector *w* orthogonal to the separating plane 104 and offset b 105.

A classifier, such as classifier 101 in Fig. 1, may be applied to an image to determine a classification score. Given an image (represented by its feature f), the classification score is obtained as follows:

$$\text{Eq. No. (1)} \quad c(\mathbf{f}) = \mathbf{w}^{T}\mathbf{f} + b$$

A classifier may be applied to a plurality of images in order to determine classification scores corresponding to the result of the applying the classifier to each of the plurality of images. The plurality of images may be stored in a database, such as an image search database. The resulting classification scores may be ranked. For example, an image's classification score may be used to rank images and/or videos in the search database by relevance.

The classification score may have a positive value if the visual concept is present and a negative value otherwise. For example, if the classification score c(f) is greater than zero, than the image is considered to contain the visual concept. If the classification score c(f) is less than or equal to zero, than the image may be considered not to contain the visual concept. The value of the classification score may be used to rank the images, with the highest ranking images being returned to the user.

Classification search systems allow users to search inside a large collection of visual media using semantic queries. For example, the user might want to search her personal collection to find all images of her family at the beach, or all images in the front porch of his house. Classification searches may utilized filters for metadata embedded in media formats (such as date or capture device model), allowing for powerful media navigation technique. Classification systems may also enable the visual recognition of nouns identified as part of machine control algorithms employing natural language processing. For example, a household robot could be told to "pass me the *bottle of soda* on *the table".* Or a self-driving car could be told to "avoid driving next to the *children* playing on the *sidewalk".* Indeed enabling a machine to interpret visual media semantically is relevant in many general fields, including the fields of computer vision, object recognition, and video-based location determination/mapping.

On-the-fly classification is a classification system that does not require a person to undertake the time consuming task of compiling a training set of images every time a search is ran. Generally, a learning algorithm requires a training set of "positive" images that contain the visual concept (e.g., a set of images containing cats) and a training set of "negative" images that do not contain the visual concept (e.g., a set of images that do not contain cats). A person must perform the time consuming task of compiling the large training sets of positive and negative images. In contrast, the on-the-fly classification system obtains the positive set of images by using the textual representation of the visual concept to query an image search engine such as Google Image Search (GIS). The on-the-fly classification system further utilizes a large pool of generic negative images for all searches.

Present on-the fly classification techniques are problematic when applied to videos. On-the-fly image classification based on present techniques cannot be extended to non-photometric video features (e.g., motion and audio features) as it would render the positive example search procedure too time-consuming. Because present on-the-fly classification techniques impose a near real-time constraint the following problems may occur :

- One cannot follow the standard on-the-fly positive set retrieval process and download a large collection of videos from the web using e.g., youtube.com. Such a process would be prohibitively time consuming.
- Further delays would be incurred by the temporal feature coding process applied to the downloaded positive videos, and hence doing so is also not practical.

Existing techniques are problematic because present classification methods are limited to searching only the image/photometric video features. The problem with existing techniques is that they are limited to reviewing image information, while failing to take into account other important video information, such as movement or audio information. Such existing techniques are also problematic because they are too slow to perform a search in real time for video features due to the time it takes to download and process video features.

Therefore a need exists to improve existing video searching techniques, including improving the speed and accuracy of existing video searching techniques.

**BRIEF SUMMARY OF THE DRAWINGS**

The features and advantages of the present principles may be apparent from the detailed description below when taken in conjunction with the Figures described below:

Figure 1 illustrates a classifier.
Figure 2 is a diagram depicting an exemplary system for extracting photometric, audio and motion features in accordance with present principles.
Figure 3A is a diagram depicting an exemplary photometric feature extractor.
Figure 3B is a diagram depicting an exemplary motion feature extractor.
Figure 3C is a diagram depicting an exemplary audio feature extractor.
Figure 4 is a diagram depicting a system for on-the-fly video searching based on photometric features.
Figure 5 is a diagram depicting an exemplary system for video searching in accordance with present principles.
Figure 6A is a diagram depicting an exemplary system for determining concatenated classification scores in accordance with present principles.
Figure 6B is a diagram depicting an exemplary system for learning fusion weights.
Figure 7 is a diagram depicting an exemplary method for searching videos in accordance with present principles.
Figure 8 is a diagram depicting an exemplary video searching system in accordance with present principles.
Figure 9 is a diagram depicting exemplary devices and an exemplary server for video searching in accordance with present principles.

**SUMMARY OF PRESENT PRINCIPLES**

There is a need to improve existing video searching techniques, including existing on-the-fly classification systems for video searching. There is also a need for a solution that addresses these problems and optimizes on-the-fly system classification for video searching.

An aspect of present principles improves the problems of on-the fly classification techniques. An aspect of present principles improves existing video searching by automatic video query expansion utilizing additional, non-photometric video features.

The present principles provide a method for searching a plurality of videos comprising receiving a search query; determing at least a first classifier from a training set determined from a first plurality of features determined based on the search query; determining a first scored plurality of videos based on the first classifier and a plurality of videos; determining at least a second plurality of features based on the first scored plurality of videos; determining at least a second classifier from a training set determined from the at least a second plurality of features determining a fused classifier based on the first classifier and the at least a second classifier; determining a second scored plurality of videos based on the based on the fused classifier and the plurality of videos; providing for display the second plurality of videos; wherein the first plurality of features are determined based on a first search utilizing the search query; wherein the first plurality of features are each of a first type video feature and wherein the at least second scored plurality of features are each of at least a second type video features; wherein the first type video feature is different than the at least a second type of video feature.

The present principles further provide an apparatus for performing a search for plurality of videos comprising a receiver configured to receive a search query; a processor configured to determine at least a first classifier from a training set determined from a first plurality of features determined based on the search query, determine a first scored plurality of videos based on the first classifier and a plurality of videos, determine at least a second plurality of features based on the first scored plurality of videos; determine at least a second classifier from a training set determined from the at least a second plurality of features, determine a fused classifier based on the first classifier and the at least a second classifier, determine a second scored plurality of videos based on the based on the fused classifier and the plurality of videos; providing for display the second plurality of videos; wherein the first plurality of features are determined based on a first search utilizing the search query; wherein the first plurality of features are each of a first type video feature and wherein the at least second plurality of features are each of at least a second type video features; wherein the first type video feature is different than the at least a second type of video feature.

The present principles further provide for the method or the apparatus described above, wherein the first type of video feature is a photometric feature.

The present principles further provide for the method or the apparatus described above, wherein the at least a second type of video feature is at least one selected from a group of video motion feature and video audio feature.

The present principles further provide for the method or the apparatus described above, wherein the at least a second type of video feature is a motion video feature and an audio video feature.

The present principles further provide for the method or the apparatus described above, wherein the first classifier is determined based on an on-the-fly search.

The present principles further provide for the method or the apparatus described above, further comprising providing the first plurality of videos for user feedback, determining a modified first plurality of videos based on the user feedback, and determining the at least a second classifier based on the modified first plurality of videos.

The present principles further provide for the method or the apparatus described above, further comprising displaying the second plurality of videos and key frames of the second plurality of videos corresponding to the search query.

The present principles further provide for the method or the apparatus described above, further comprising providing the second plurality of videos for user feedback, determining a modified second plurality of videos based on the user feedback, and providing for display the modified second plurality of videos.

The present principles further provide for the method or the apparatus described above, wherein the search is performed remotely and the first plurality of features is provided from the remotely performed search.

The present principles further provide for the method or the apparatus described above, wherein the second plurality of features are extracted prior to performance of the search and are selected based on the first plurality of videos.

The present principles further provide for the method or the apparatus described above, wherein the second plurality of features are prestored.

The present principles further provide for the method or the apparatus described above, wherein the second type of features are temporal features.

The present principles further provide for the method or the apparatus described above, wherein the prestored second plurality of features are indexed.

The present principles further provide for the method or the apparatus described above, determining a third plurality of features based on the user verified second plurality of videos; determining a third classifier from a training set determined from the third plurality of features; determining a fused classifier based on the first classifier, the at least a second classifier, and the third classifier; determining a third scored plurality of videos based on the based on the fused classifier and the plurality of videos.

**DETAILED DESCRIPTION**

An aspect of present principles may be implemented on any electronic device or combination of electronic devices. For example, the present principles may be implemented on any of variety of devices including a computer, a laptop, a smartphone, a handheld computing system, a remote server, a professional color grading workstation, cloud services and/or on any other type of hardware or combination of hardware and software that includes a processor or other components for performing the method of the present principles. Various examples of the present principles are described below with reference to the figures.

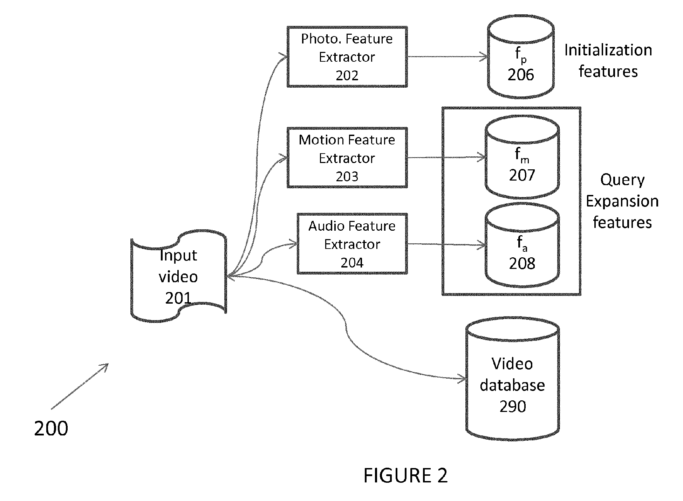

Fig. 2 illustrates a system 200 for extracting photometric, audio and motion features for a video in accordance with present principles. The system 200 may receive a video 201. The video 201 may be received from an outside source or from a video database 290. In one example, the video 201 may be received from an outside source and may be stored in video database 290. In one example, the video database 290 may include all videos available for future video searches/queries. In one example, the video database 290 may include a personal collection of videos (e.g., family videos). In one example, the video database 290 may be stored in a server that can stream the videos (e.g., Dropbox, Youtube). In one example, the video database 290 may allow for searching of the videos in the database. For example, the video may be stored on a server that allows searching for visual content (e.g., find the video of the president of X, the president of Y, a cat, on the beach).

The system 200 may include a photometric feature extractor 202, motion feature extractor 203, and audio feature extractor 204, which can exist as stand alone elements as depicted in FIG. 2 or can take the form of functionalities associated with a processor or specific circuitry dedicated to these tasks. Each of the photometric feature extractor 202, the motion feature extractor 203, and the audio feature extractor 204 may extract the corresponding features from the video 201. In another example, the system 200 may extract photometric, motion and audio features $f_p$, $f_m$, $f_a$ of each video in a video database 290.

The system 200 may extract and store the photometric, motion and audio features $f_p$, $f_m$, $f_a$ for each video. In one example, the photometric, motion and audio features $f_p$, $f_m$, $f_a$ may be extracted for each keyframe k of each video, at regular time intervals (e.g., every second, so t=0, t=1, t=2, ... etc.). For example, the system 200 may extract photometric, audio and motion features $f_p$, $f_m$, $f_a$ for each video image frame at a time t (otherwise known as a key frame). The extracted motion and audio features may be examples of query expansion video features to be utilized during video searching.

Extracting photometric features, motion vectors and audio features may produce three different types of features for each key frame of the video: $\mathbf{f}_p \in R^{Dk}$, $\mathbf{f}_m \in R^{Dm}$, and $\mathbf{f}_a \in R^{Da}$. Such features may be used during query to determine a *late fusion* classifier. The late fusion classifier may be determined based on a different classifier for each type of feature and then by determining a general fusion-based classification score using a linear combination of the classifier scores. The addition of the motion and audio features to the photometric features improves classification by exploiting video features in addition to photometric features, such as video motion and audio features. The additional video features are not limited to motion and audio features, but may include any other features determinable from a video.

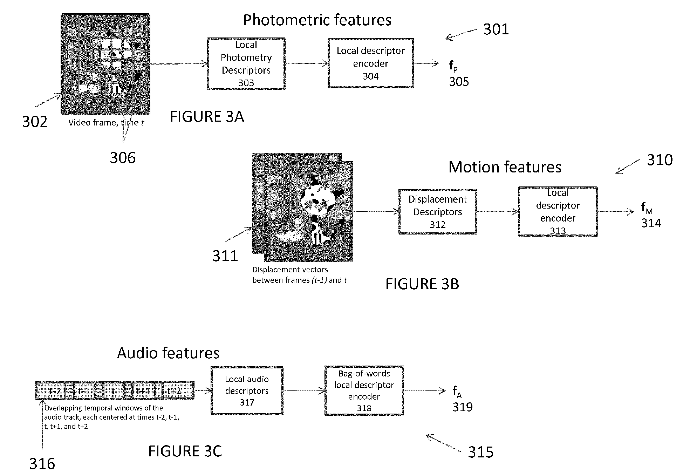

The photometric feature extractor 202 may extract photometric/image features of video frames, e.g., the video 201. The resulting image features may be photometric features $f_p$. In one example, the photometric feature extractor 202 may extract photometric features from key frames of the video 201. The photometric feature extractor 202 may include an extractor of photometric features. In one example, the photometric feature extractor 202 may extract photometric features based on local descriptors. The images may be encoded with a local descriptor encoder, such as a bag-of-words encoder, a Fisher Encoder a VLAD encoder. Alternatively, the features may be derived directly from the image using, for example, concatenations of activations from Deep Convolutional Neural Networks (DCNNs), extensions of any of these features based on explicit or implicit kernels such as the spatial pyramid matching kernel or any other geometric modelling scheme, or the Hellinger kernel or any other feature normalization method. The photometric feature extractor 202 may also encode the photometric features. The extracted photometric features $f_p$ may be stored in a photometric features $f_p$ database 206. In one example, the photometric feature extractor 202 may extract and encode photometric features in accordance with principles described in connection with Fig. 3A below.

The motion feature extractor 203 may extract motion features of the video 201. The motion feature extractor 203 may encode the extracted motion features $f_m$. The motion feature extractor 203 may include an extractor of motion features $f_m$. The extractor of motion features may then store in a database the motion features $f_m$ of the video 201. In one example, the motion feature extractor 203 may extract the motion features based on the displacement vectors between matching blocks of consecutive key frames of the video 201. The displacement vectors can be encoded using standard methods such as bag-of-words, Fisher Encoder, VLAD encoder, DCNN. Alternatively, motion features may be derived directly from image sequences using, for example, concatenations of DCNN activations and extensions thereof. Alternatively, optical flow vectors can be used instead of the displacement vectors obtained via block-matching. The extracted motion features $f_m$ may be stored in a motion features $f_m$ database 207. In one example, the motion feature extractor 203 may extract and encode motion features in accordance with principles described in connection with Fig. 3B below.

The audio feature extractor 204 may extract audio features of the video 201. The resulting audio features may be audio features $f_a$. The audio feature extractor 204 may also encode the extracted audio features. The audio feature extractor 204 may include an extractor of audio features $f_a$. The extractor of audio features may store in a database the audio features $f_a$ of the video 201. In one example, the audio feature extractor 204 may extract audio segments from key frames. The audio feature extractor 204 may sub-divide the audio segments into overlapping local windows. Audio vectors may be computed for each window, e.g., Mel-Frequency Cepstrum Coefficients (MFCC) vectors. The audio vectors may be encoded using standard methods such as bag-of-words, Fisher Encoder, VLAD encoder DCNN activations and extensions thereof. Alternatively, audio features may be calculated by first transforming an audio segment into its time-frequency spectrum graph, and then using this graph as an image that is described using standard image feature encoding methods. Alternatively, audio features may be derived directly from audio segments using, for example, concatenations of DCNN activations and extensions thereof. The extended audio features $f_a$ may be stored in an audio features $f_a$ database 208. In one example, the audio feature extractor 204 may extract and encode audio features in accordance with principles described in connection with Fig. 3C below.

The databases 206-208 may share software and/or hardware. Alternatively, the databases 206-208 may be in part or in whole implemented in different software and/or hardware modules.

An initial type of features, e.g., such as photometric features may be used as initialization features that are utilized to retrieve an initial set of videos. For example, the photometric features $f_p$ may be identified as the initialization features. The initialization features may be utilized to retrieve an initial set of videos. The initial set of videos may be utilized positive videos from video database 290. The initial set of videos may be utilized to determine one or more types of additional features, such as motion and audio features from, e.g., from databases 207 and 208, from the initial set of videos. These additional features may be used to determine additional classifiers to subsequently re-query the video database using the newly retrieved additional features, as well as the initialization features.

Fig. 3A illustrates an exemplary photometric feature extractor 301 that may extract photometric features of a video frame. The photometric feature extractor 301 may process a video composed of a sequence of video frames sampled at regular time intervals (e.g., every 1 second, 2 seconds, 3 seconds, ... n seconds). For example, the video frame may be sampled from a video at a time "t". The feature extractor 301 may receive a video frame 302. Feature extractor 301 that may divide the video frame 302, sampled at a time $t$, into image patches 306. Block 303 may compute local photometry descriptors for the image patches 306. In one example, for each image patch 306, block 303 computes a local photometry descriptor. In one example, each local photometry descriptor may be computed using an algorithm for each patch, such as the Scale Invariant Feature Transform (SIFT) algorithm. The result is a local photometry descriptor vector (e.g., a SIFT vector $x_i$ of size 128) for each patch. Block 303 may then pass control to block 304. The block 304 may be a local descriptor encoder, such as a bag-of-words local descriptor encoder or a Fisher encoder. The block 304 may encode the local photometric descriptors into encoded photometric features $f_p$ 305. The block 304 may then output the encoded photometric features $f_p$ 305.

Fig. 3B illustrates an exemplary motion feature extractor 310. The motion feature extractor 310 may process a video composed of a sequence of video frames by sampling video frames at regular time intervals (e.g., every 1 second, 2 seconds, 3 seconds, ... n seconds). The motion feature extractor 310 may include a block 311 that calculates displacement vectors between video frames at time $(t-1)$ and time $t$. Block 311 may pass control to block 312. Block 312 may compute displacement descriptors for the displacement vectors computed at block 311. In particular, block 312 may determine displacement vectors of size two. The displacement vectors may indicate the position of each block in a given video frame relative to the most similar block (as per the Euclidean distance) in the previous (key)frame. Block 312 passes control to block 313. Block 313 may be a local descriptor encoder, such as a bag-of-words local descriptor encoder or a Fisher encoder. Block 313 may encode the local displacement descriptors into encoded motion features $f_m$ 314. Block 313 may then output the encoded motion features $f_m$ 314.

Fig. 3C illustrates an exemplary audio feature extractor 315. The audio feature extractor 315 may process a video composed of a sequence of video frames by sampling video frames at regular time intervals (e.g., every 1 second, 2 seconds, 3 seconds, ... n seconds). The audio feature extractor 315 may include a block 316. Block 316 may sub-divide audio segments from key frames of a video. In one example, block 316 may sub-divide audio segments based on over-lapping temporal windows of the audio track of a video, where the windows are each centered at times t-2, t-1, t, t+1, and t+2. Block 316 may pass control to block 317. Block 317 may compute local audio descriptors. In one example, block 317 may compute an audio vector, such as an audio MFCC vector for each window provided by block 316. Block 317 passes control to block 318. The block 318 may be a local descriptor encoder, such as a bag-of-words local descriptor encoder or a Fisher encoder. Block 318 may encode the local audio descriptors into encoded audio features $f_a$ 319. Block 318 may then output the encoded audio features $f_a$ 319.

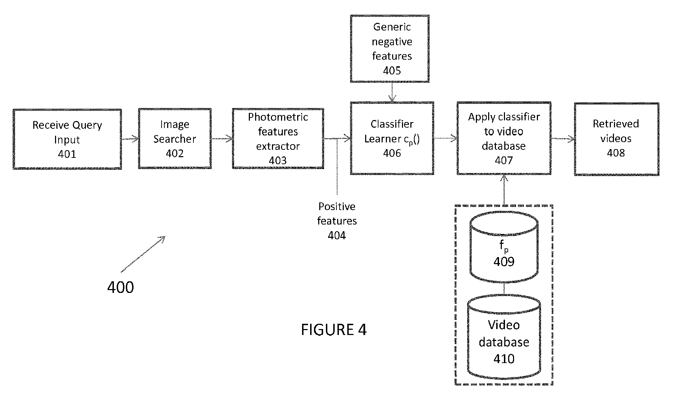

Fig. 4 illustrates a system 400 for on-the-fly searching of videos based on photometric features. System 400 may include a receiver for receiving a query input 401. The query input 401 may be entered via a device capable of entry of any type of query (e.g., textual, visual, audio or otherwise). The query input 401 may be any type of query (e.g., textual, visual, audio or otherwise). For example, the query input 401 may be the text "sheep". Alternatively, the input query 401 may be a visual image of a "sheep." Alternatively, the input query 401 may be an audio representation of the word "sheep" which may then be converted to the text "sheep." The query input 401 is provided to an image searcher 402.

The image searcher 402 may provide the query input 401 for image searching. In one example, the image searcher 402 may provide the query input 401 to an image search engine. In one example, the image search engine may be capable of using the textual representation of the visual concept of the query input to search images. For example, the image search engine may be an image search engine such as Google Image Search (GIS). In one example, the image searcher 402 may be implemented remotely, such as online and/or through a web service, or may be performed by an image search engine that is implemented remotely.

Alternatively, the image searcher 402 may be implemented in whole or in part locally. The image searcher 402 may return a positive set of images representing the visual concept. The image searcher 402 may provide the positive set of images to the photometric feature extractor 403. The image searcher 402 may limit the number of positive set of images based on practical considerations, e.g., system memory and processing capabilities. Using a larger number of positive images improves the classifier results, but also increases the system response time. In one example, a reasonable number of positive images is in the tens or hundreds, depending on the computational power available.

The photometric features extractor 403 may extract photometric features of the positive set of images received from image searcher 402. The photometric features extractor 403 may encode the extracted photometric features of the positive set of images. The photometric feature extractor 403 may output a set of positive photometric features 404. In one example, the photometric features extractor 403 may extract the positive set of photometric features 404 in the same way as the image features of the generic image features 405. In another example, the photometric features extractor 403 may be optional and the image features may be received directly from image searcher 402. The resulting positive photometric features 404 may be provided to a classifier learner 406.

The classifier learner 406 may receive the positive image features 404 and a set of negative photometric features 405. The positive image features 404 correspond to a positive set of images that include the visual concept and the generic negative image features 405 correspond to a generic set of negative images. In one example, the negative set of photometric features 405 may be determined from a generic set of images. In one example, the negative set of photometric features 405 can be derived from a set of generic videos randomly chosen from a video collection. The classifier learner 406 may perform a classifier learning algorithm to determine a photometric classifier $c_p()$ based on the set of positive photometric features 404 and the negative set of photometric features 405. In one example, the classifier learning algorithm may be an SVM algorithm. Alternatively, the classifier learning algorithm may be a K-nearest-neighbor classifier, a nearest class-mean classifier, a neural network classifier or a deep neural network classifier, a soft-max classifier, a maximum likelihood classifier or a maximum a posteriori classifier. The classifier learner 406 may provide the photometric classifier $c_p$ to block 407.

Block 407 may apply the learned classifier $c_p$ to the videos in the video database 410. In one example, block 407 may apply the classifier $c_p$ to the photometric features $f_p$ in database 409.. The photometric features $f_p$ in photometric feature database 409 may be the features extracted from key frames of the videos in the video database 410. The video database 410 may contain the videos to be searched. In one example, the video database 410 may be a video database similar to the video database 290 described in connection with Fig. 2. Block 407 may compute a classification score based on the application of the classifier $c_p$. The classification score may be used to rank the videos or video key frames in descending order from the highest classification score to the lowest classification score. In one example, block 407 may rank the video keyframes for videos in database 410 in descending order based on the inner product of $c_p$ with the feature vectors $f_p$ in database 409 corresponding to the video being presently searched. The scored results may be the retrieved videos 408. The retrieved videos may each be presented starting at the timestamp corresponding to the timestamp of the photometric feature $f_p$ that the classification score of the video key frame is based upon. Alternatively, rather than using the inner product between the classifier $c_p$ and each $f_p$ to rank the videos, block 407 may determine a classification score based on the average inner product over multiple video keyframes centered at the timestamp associated with photometric features $f_p$. In one example, block 407 provides the retrieved videos 408, including providing information relating to the highest ranked videos and/or the highest ranked key frames identified by a time stamp.

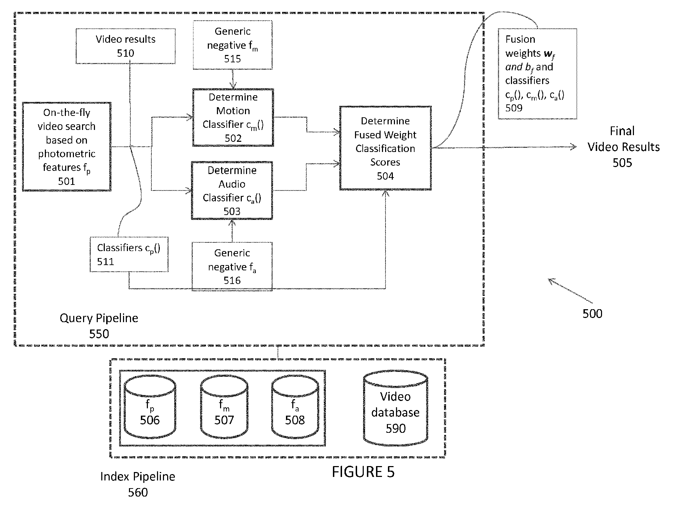

Fig. 5 illustrates a system 500 for video searching in accordance with present principles.

In one example, the system 500 may include a query pipeline 550. The query pipeline 550 may process the searching of the videos based on the received the query. In one example, the query pipeline 550 may be performed in real-time when the system performs the query. The system 500 may also include an index pipeline 560. The index pipeline 560 may be performed at the time of indexing the video files. The index pipeline may preferably be performed prior to execution of the query pipeline 550. For example, the indexing may be performed off-line prior to a video search. Alternatively, the query pipeline 550 may be in part offline prior to the performance of the video search.

**Indexing**

The index pipeline 560 may include a video database 590. The index pipeline 560 may be performed in whole or in part offline prior to the performance of query pipeline 550.

The video database 590 may include all the videos to be searched. In one example, the video database 590 may include a personal collection of videos (e.g., family videos). In one example, the video database 590 may be a video database similar to the video database 410 described in connection with Fig. 4. In one example, the video database 590 may be a video database similar to the video database 290 described in connection with Fig. 2.

In one example, the video database 590 may include various videos, such as videos of president of X, the president of Y, a cat, on the beach. In one example, the video database 590 may be compiled off-line prior to the performance of a query. The video database 590 may be stored on a server that can stream the videos (e.g., Dropbox, Youtube). In one example, the video database 590 may be stored on a server that allows searching of video database 590 within the frames of the videos. The system 500 may receive and index proprietary, unannotated videos into video database 590. In one example, the videos may be indexed at the time they are added to the video database 590. In one example, the videos may be indexed offline, prior to the performance of the video search query.

The system 500 may extract features of one or more types for each video in the video database 590. In one example, the system 500 may extract the photometric, motion and audio features $f_p$, $f_m$, $f_a$ of key frames of each video in video database 590. The photometric, motion and audio features $f_p$, $f_m$, $f_a$ may be extracted for each keyframe k of each video in the video database 590. The extracted photometric, motion and audio features $f_p$, $f_m$, $f_a$ may be stored in databases 506, 507 and 508, respectively. The extracted photometric, motion and audio features $f_p$, $f_m$, $f_a$ may further be indexed within databases 506, 507 and 508, respectively. The photometric, motion and audio features $f_p$, $f_m$, $f_a$ may be extracted and indexed offline in order to save processing time during querying. The index may keep track of the timestamp/video id associated with each feature (e.g., photometric, motion, or audio features). In one example, one set of features $f_p$, $f_m$, $f_a$ is extracted and stored for each timestamp (the time associated with the keyframe).

The databases 506-508 may share software and/or hardware. Alternatively, the databases 506-508 may be in part or in whole implemented in different software and/or hardware modules. In one example, the databases 506-508 may be equivalent to the databases 206-208 of Fig. 2.

In one example, the system 500 may extract and store features, e.g., the photometric, motion and audio features $f_p$, $f_m$, $f_a$ at regular time intervals (e.g., every second, so t=0, t=1, t=2, ... etc.). For example, the system 500 may extract photometric, audio and motion features $f_p$, $f_m$, $f_a$ for each video image frame at a time t (otherwise known as a key frame). Extracting photometric features, motion vectors and audio features may produce three different types of features for each key frame of the video: $\mathbf{f}_p \in R^{Dk}$, $\mathbf{f}_m \in R^{Dm}$, and $\mathbf{f}_a \in R^{Da}$. Such features may be used during the query performed at the query pipeline 550 to determine a *late fusion* classifier. The late fusion classifier may be determined based on a different classifier for each type of feature and then by determining a general fusion-based classification score using a linear combination of the classifier scores. The addition of the motion and audio features to the photometric features improves classification by exploiting video features in addition to photometric features, such as video motion and audio features. The additional video features are not limited to motion and audio features, but may include any other features determinable from a video.

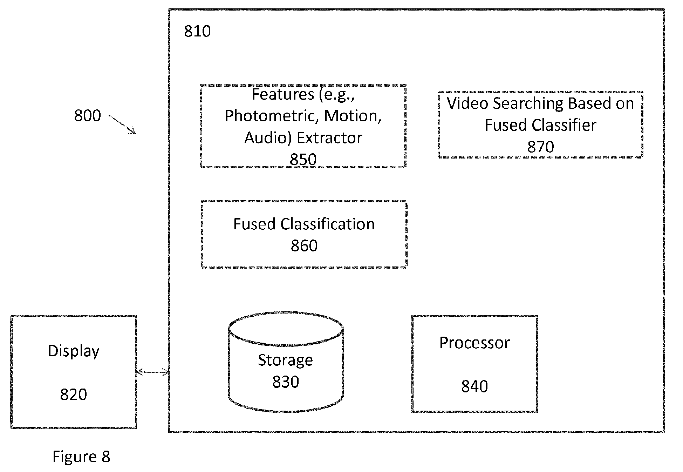

In one example, the index pipeline 560 may compute features (e.g., $f_a$, $f_m$, $f_p$), for keyframes of each video in the video database 590 and the data structures that associated the feature vectors to specific time instants of the key frames of the videos. In one example, the index pipeline 560 can also include facilities to compute inner products between a classifier (e.g., $c_a$) and all the features (e.g., $f_a$) in the corresponding database (e.g, 508). In one example, index pipeline 560 can compute the inner products quickly using existing hashing-type techniques based on, for example, data partitioning, where all the features (e.g., $f_a$) are stored in bins, with a centroid representing the contents of the bin, and hashing to a specific bin being done according to the highest inner product between $c_a$ and the corresponding centroids. Other hashing-type techniques include Locality Sensitive Hashing and Product Quantization Codes for approximate search. All these techniques can be implemented in software and run on standard hardware, such as, for example the processor 840 in Fig. 8.

The photometric feature $f_p$ database 506 may store the photometric features of the videos of database 590. In one example, the photometric features $f_p$ stored in database 506 may be extracted and stored in accordance with the principles described in connection with Figs. 2 and 3A. The motion features $f_m$ database 507 may store the motion features of the videos of database 590. In one example, the motion features $f_m$ stored in database 507 may be extracted and stored in accordance with the principles described in connection with Figs. 2 and 3B. The audio features $f_a$ database 508 may store the motion features of the videos of database 590. In one example, the audio features $f_a$ stored in database 508 may be extracted and stored in accordance with the principles described in connection with Figs. 2 and 3C.

**Querying**

In one example, the system 500 may include a block 501 that may determine initial video results 510 based on an initial search based on at least a type of video feature. The initial search is preferably a fast querying search, such as an on-the fly search. In one example, the initial video results 510 may be determined based on an on-the-fly video search an initial type of features, e.g., photometric features. In one example, the block 501 may perform the on-the-fly search in accordance with the principles described in connection with Fig. 4. In one example, the query pipeline 550 need only compute the photometric features for the positive image features obtained during the initial search, e.g., during the on-the-fly search . The photometric features are then used to learn a photometric classifier $c_p()$ which will then be applied to a database of photometric features computed offline. Alternatively, the system 500 may determine the initial video results based on any type of feature. The system 500 may determine any type of classifiers.

The block 501 may provide one or more video results 510. The block 501 may determine the video results 510 based on the top ranking results of the video search (e.g., on the fly) and/or based on user verification. For example, the video results 510 may be the top ranked videos located by the search performed by block 501. Alternatively, the video results 510 may be the videos returned by the search performed by block 501 that have been verified and/or marked by a user as containing the searched visual concept. These video results 510 may represent the positive set of videos that contain the visual concept. The initial search may be based on at least a type of feature, e.g., photometric. A query expansion may be based on one or more additional types of features, e.g., motion and/or audio.

Block 501 may further provide a classifier determined based on a first type of features to block 504. For example, block 501 may provide a photometric classifier $c_p()$ 511 to block 504. The classifier, e.g., the photometric classifier $c_p()$, may be determined based on a set of positive features and a set of negative features. The positive set and negative sets of features may be of a first type, e.g., photometric features. The first type of features is preferably independent of temporal aspects. For example, the first type of features are features that are derived from images that are unrelated to one another in a temporal or of time sense (e.g., independent images).

Block 502 may determine at least a classifier of a second type, e.g., such as motion classifier $c_m()$. The second type of features are preferably temporal features. For example, the second type of features are features that are derived from images that are related in a temporal or of time sense (e.g., images from the same temporal image sequence, such as a video).

Block 502 may receive the video results 510 from block 501. Block 502 may determine the second type classifier, e.g., the motion classifier $c_m$ based on a set of positive features of the second type, e.g., motion features $f_m$, and a set of generic negative features of the second type, e.g., motion features $f_m$ 515. In one example, the positive features may be retrieved based on video results 510 (e.g., from database 508). In one example, block 502 may determine the positive motion features $f_m$ based on all the motion features $f_m$ for all the video results 510. In another example, block 502 may determine the positive motion features $f_m$ based on the highest ranked keyframes of video results 510 (e.g., the top ranked 1000 key frame motion features $f_m$ may be used as the positive features for training the motion classifier $c_m()$). In another example, block 502 may determine the positive motion features $f_m$ based on a verification from the user of the results 510. Using the results 510 is advantageous because it enables the use of an extra modality (motion), which provides extra semantic information, without additional computations and little or no user interaction. In one example, block 502 may obtain the selected motion features $f_m$ from motion features $f_m$ database 507.

Block 502 may receive the set of negative features of a second type, e.g., motion features $f_m$. In one example, block 502 may receive a set of generic negative motion features $f_m$ 515. The generic negative motion features $f_m$ 515 may be computed off-line prior to the performance of the video search to avoid computational overhead. The generic negative motion features $f_m$ 515 may be computed based on a generic set of videos. In one example, the generic negative motion features represent the universe of motion features of a database of videos. In one example, the videos from which the generic negative motion features $f_m$ are extracted should preferably be unrelated to the videos in video search database 590.

Block 502 may determine the second type classifier based on a classifier learning algorithm utilizing the set of positive features, e.g., positive motion features, and the generic set of negative features, e.g., negative motion features. In one example, block 502 may use a learning algorithm based on the positive and negative sets of features. Block 502 may thus compute a classifier of a second type, e.g., motion classifier $c_m()$ which may be provided to block 504.

Block 503 may determine a third type of a classifier. In one example, block 503 and the subsequent blocks relating to a third type of a classifier may be optional. In another example, block 502 and the subsequent blocks may be optional, and only block 503 and its subsequent blocks may be used. Alternatively, additional types of classifiers (e.g., fourth, fifth,) may be used. In one example, block 503 may determine an audio classifier $c_a()$. Block 503 may receive the video results 510 from block 501. Block 503 may compute the audio classifier $c_a()$ based on a set of positive features of a third type, e.g., audio features $f_a$, and a set of generic negative features of a third type, e.g., audio features $f_a$ 516. The third type of features are preferably temporal features. For example, the third type of features are features that are derived from images that are related in a temporal or of time sense (e.g., images from the same temporal image sequence, such as a video).

In one example, the positive features may be retrieved based on video results 510 (e.g., from database 590). In one example, block 503 may determine the positive audio features $f_a$ based on all the audio features $f_a$ for all the video results 510. In another example, block 503 may determine the positive audio features $f_a$ based on the highest ranked keyframes of video results 510 (e.g., the top ranked 1000 key frame audio features $f_a$ may be used as the positive features for training the audio classifier $c_a()$).In another example, block 502 may determine the positive motion features $f_m$ based on a verification from the user of the results 510. Using the results 510 is advantageous because it enables the use of an extra modality (motion), which provides extra semantic information, without additional computations and little or no user interaction. In one example, block 503 may obtain the selected audio features $f_a$ from audio features $f_a$ database 508.

Block 503 may receive the set of negative features of a third type, e.g., audio features $f_a$. In one example, block 503 may receive a set of generic negative audio features $f_a$ 516. The generic negative audio features $f_a$ 516 may be computed off-line prior to the performance of the video search to avoid computational overhead. The generic negative audio features $f_a$ 516 may be computed based on a generic set of videos. In one example, the generic negative audio features represent the universe of sound features of a database of videos. In one example, the videos from which the generic negative audio features $f_a$ are extracted should preferably be unrelated to the videos in video search database 590.

Block 503 may determine the third type classifier based on a classifier learning algorithm utilizing the set of positive features, e.g., positive audio features, and the generic set of negative features, e.g., negative audio features. In one example, block 503 may use a learning algorithm based on the positive and negative sets of audio features to perform the classifier learner. Based on the classifier learner, block 503 may compute a classifier of a third type, e.g., an audio classifier $c_a()$ which may be provided to block 504.

Block 504 may determine a fused classification score based on one or more type classifiers. In one example, the fused classification score may be determined for each video key frame. In another example, the fused classification score may be determined for each video. The fused classification score for a video may be determined based on a weighted average of classification scores of all the keyframes in the video.

In one example, block 504 may determine a fused classification score for each of the videos in video results 510. In another example, block 504 may determine a fused classification score for each video in video database 590. In one example, block 504 may determine the fusion-based classification scores based on one or more of the photometric, motion and audio features in 507, 508 and 509, respectively, and on one or more of photometric, motion and audio classifiers received from blocks 501, 502 and 503, respectively.

Block 504 may receive one or more classifiers of one or more types. In one example, block 504 may receive classifiers $c_p()$, $c_m()$, $c_a()$ corresponding to photometric classifiers, motion classifiers and audio classifiers of the video results 510, respectively. In another example, block 504 may utilize only one or two of the classifiers $c_p()$, $c_m()$, $c_a()$. The classifiers $c_p()$, $c_m()$, $c_a()$ may be received from blocks 501, 502 and 503, respectively. Block 504 may further receive the photometric, motion and audio features $f_p$, $f_m$, $f_a$ from the databases 507, 508 and 509, respectively, for the videos that are searched.

In one example, block 504 may determine a fused classification score for each video timestamp based on a linear combination of the individual classifiers $c_p(f_p)$, $c_m(f_m)$, $c_a(f_a)$ computed for all features in $f_p$, $f_m$, $f_a$ from the databases 507, 508 and 509, respectively. The classifiers may be provided by blocks 501, 502 and 503 respectively. The features $f_p$, $f_m$, $f_a$ may be determined for each time instant, e.g., for each key frame. Given a "k" identifier for a given time in a given video, then $f_{pk}$, $f_{mk}$, and $f_{ak}$ are the respective photo, motion and audio features for that video frame at time k. The fused classification score for a video frame at that time k may be computed using a weighted sum $w_p*c_p(f_{pk}) + w_m*c_m(f_{mk}) + w_a*c_a(f_{ak})$. The weights $w_p$, $w_m$ and $w_a$ can be arranged to form a size-three vector $w_f$. Block 504 may compute a classification score for each time instant of each video in the video results 510 or in the video database 590.

Block 504 may determine a concatenated classification score per timestamp (e.g., keyframe) of each video based on classifiers for each modality (photo, motion, audio) $c_p()$, $c_m()$, $c_a()$ and features $f_p$, $f_m$, $f_a$. In one example, the block 504 may determine a vector of concatenated classification scores consisting of classification scores $c_p(fp)$, $c_m(f_m)$, $c_a(fa)$. In one example, the concatenated classification scores may be defined as follows:

$$\text{Eq. No. (2)} \qquad g = \left[ c_p(\mathbf{f}_p),\ c_m(\mathbf{f}_m),\ c_a(\mathbf{f}_a) \right]^T$$

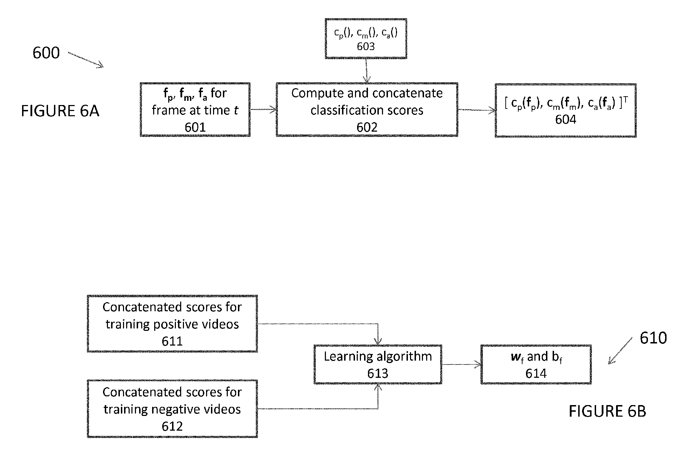

The features $f_p$, $f_m$, $f_a$ in Eq. No. 2 are the $f_p$, $f_m$, $f_a$ for a keyframe of a video at a certain time or timestamp. In one example, the concatenated classification score at a key frame may be computed by treating the three scores as a vector, $[c_p(\mathbf{f}_p), c_m(\mathbf{f}_m), c_a(\mathbf{f}_a)]$. In one example, the concatenated classification scores may be computed in accordance with principles described in connection with Fig. 6A.

Fig. 6A illustrates an example for a method 600 for concatenating classification scores for an image/video frame. Method 600 includes a block 601 that may compute or receive features $f_p$, $f_m$, $f_a$ corresponding to photometric features, motion features and audio features, respectively, for a video frame sampled at time *t*. Block 601 may provide features $f_p$, $f_m$, $f_a$ to block 602. Method 600 further includes a block 603 that may compute or receive classifiers $c_p()$, $c_m()$, $c_a()$ corresponding to photometric classifier(s), motion classifier(s), and audio classifier(s), respectively. Block 603 may provide classifiers $c_p()$, $c_m()$, $c_a()$ to block 602. Block 602 may apply the classifiers $c_p()$, $c_m()$, $c_a()$ to each features $f_p$, $f_m$, $f_a$ at a time k, respectively and concatenate the three resulting classification scores at block 604. Block 604 may output a concatenated classification score $[c_p\mathbf{f}_p, c_m(\mathbf{f}_m), c_a(\mathbf{f}_a)]^T$.

Block 504 in Fig. 5 may then determine a fused classification score for a video at a time or timestamp based on the concatenated classification scores.

The fused classification score may be deter-

mined based on parameters $\mathbf{w}_f$ and $b_f$. Parameters $\mathbf{w}_f$ and $b_f$ can be determined based on a learning algorithm (e.g., a SVM learning algorithm). In one example, parameters $\mathbf{w}_f$ and $b_f$ may be determined based on positive and negative features. The positive features may be derived based on all positive videos used to train the photometric, audio and motion classifiers. The negative features may be derived based on all negative videos used to train the photometric, audio and motion classifiers. Alternatively, only a subset of these composite positive and negative sets can be used. These subset (called the *held out set,* in this case) could further have been removed from the original sets when training the initial photometric, audio and motion classifiers. The parameters $\mathbf{w}_f$ and $b_f$ may be computed once and applied to all videos in database 590. Alternatively, different parameters $\mathbf{w}_f$ and $b_f$ may be computed for one or more videos in database 590. Parameters $\mathbf{w}_f$ and $b_f$ may define a hyperplane separating positives and negatives as shown in Fig. 1. In one example, parameters $\mathbf{w}_f$ and $b_f$ may be computed in accordance with principles described in connection with Fig. 6b .

Fig. 6B illustrates a flow diagram for an exemplary method 610 for learning fusion weights using a learning algorithm. Method 610 includes a block 611 for computing or receiving concatenated classification scores for positives videos that contain the concept of the search. Method 610 further includes a block 612 for computing or receiving concatenated classification scores for positives videos that do not contain the concept of the search. The blocks 611 and 612 may pass control to a block 613. The block 613 may receive the classification scores for the positive and negative videos from the blocks 611 and 613, respectively. The block 613 performs a learning algorithm, such as an SVM algorithm, on the concatenated classification scores for the positive and negative videos. The learning algorithm of block 613 computes $\mathbf{w}_f$ and $b_f$ corresponding to Equation No. 3. The block 614 may output $\mathbf{w}_f$ and $b_f$.

Block 504 in Fig. 5 may determine a classification score for a video. Block 504 may compute a fused classification score for each video and/or video key frame. The fused classification score may be used as a measure of pertinence to the video and/or video key frame relative to the query; the higher the score, the more relevant the video and/or video keyframe.

Applying the features $f_a$, $f_m$ and $f_p$ associated with a keyframe of a video amounts to computing $\mathbf{w}_f^T\mathbf{g}$ + $b_f$. The fused classification score may be defined as follows:

$$\text{Eq. No. (3)} \qquad c_f(g) = \mathbf{w}_f^T\,\mathbf{g} + b_f$$

$C_f(g)$ is the classifier that produces/computes the classification score of a feature f of a video key frame at a time k.

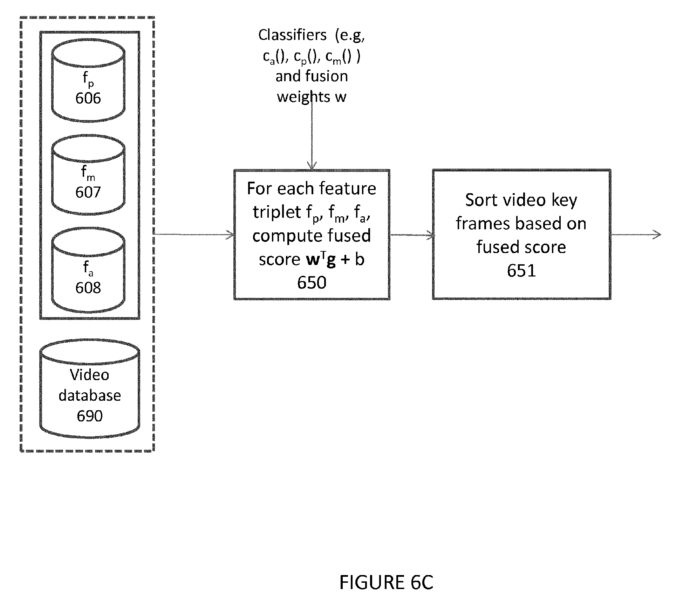

Fig. 6C illustrates an example of using the learned multi-modal fused classifier determined in Fig. 5 to sort the videos or keyframes in a database. In one example, each keyframe at a time or timestamp of a video has an associated features $f_a$, $f_m$ and $f_p$ that may be retrieved from databases 608, 607 and 606, respectively. Block 650 may determine, for each feature triplet $f_a$, $f_m$ and $f_p$, the fused classification score based on Equation No. 3. Block 651 may sort video key frames in decreasing order based on the fused score. In one example, block 504 may perform in whole or in part the functions described relative to Fig. 6. For example, block 504 may determine and output fused classification scores, including the various classifiers and fusion weights.

Block 504 in Fig. 5 may output video key frames based on the highest fused score. In one example, block 504 may output the key frame and the video for the user's selection. In another example, block 504 may output the video corresponding to each of the highest fused score key frames. In another example, block 504 may then compute an average classification score for a video based on averaging the fused scores over all keyframes in a video. Block 504 can also compute an average fused classification score for each video segment (e.g., 5 seconds), by averaging the fused classification score over all 5 second windows, thus assigning a fused classification score to each timestamp. Block 504 may compute average classification scores for each video in the video database 590.

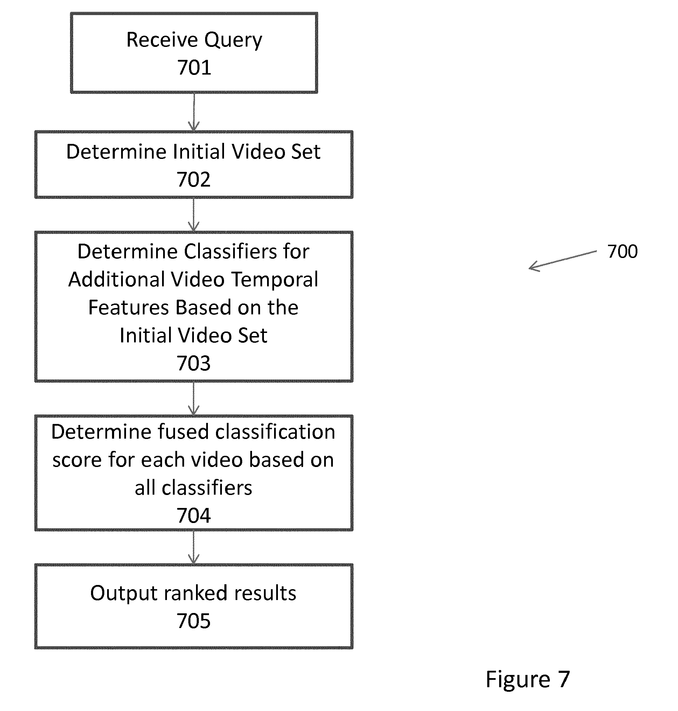

Block 504 may then output the final video results 505. The final video results 505 may include the highest re-ranked videos 505. Block 504 may provide the highest re-ranked videos at specific timestamps corresponding to the videos' highest ranked key frames. The video results 505 may be displayed, e.g., to a user. Block 504 may provide the re-ranked video search results 505 for user feedback. For example, a user may be presented with the re-ranked videos 505 and the user may provide an indication on which videos are correct and which are not. The selected videos may be provided as an additional positive set for block 501 at the input of the system. In one example, the selected videos may be provided as a positive set to block 501 instead of the on-the-fly image query (e.g., Google query). Fig. 7 is a flow diagram illustrating an exemplary method 700 for searching videos in accordance with present principles. The method 700 includes a block 701 for receiving a query. The query may be received in accordance with the principles described in connection with Figs. 1-5.

Method 700 includes a block 702 for determining an initial set of videos. Block 702 may determine the initial set of videos using an on-the-fly search based on one feature of a video database. In one example, block 702 may determine the initial set of videos using an on-the-fly search based on the photometric features video database. Block 702 may further determine a photometric classifier based on the search for the initial video set. Block 702 may determine the initial set of videos by performing an initial on-the-fly video search in accordance with the principles described in connection with Figs. 3-5.

Block 703 may determine classifiers for additional video features based on the initial video set. In one example, the temporal features may be at least one of motion and audio features. Block 703 may determine each temporal classifier based on the initial set of video search results. Block 703 may determine the additional temporal classifiers (e.g., motion and audio) in accordance with principles described in connection with Figs. 1-6. Block 702 may pass control to block 703.

Block 704 may determine a fused classification score based on the classifiers features received from blocks 702 and 703. Block 704 may determine a fused classification score in accordance with principles described in connection with Fig. 5. In one example, block 704 may then determine a fused classifier based on the photometric classifier $c_p$, a motion classifier $c_m$ and/or an audio classifier $c_a$. In one example, the block 703 may determine a fused classifier score based on a linear combination of the individual classifiers. The block 703 may then pass control to block 704.

The block 704 may apply the fused classifier may then be applied to each video in a set of videos. The block 704 may determine a classification score for each video based on the application of the fused classifier. Block 704 may then pass control to block 705. Block 705 may output the videos provided by block 704. Block 705 may be ranked the results based on the classification scores and the ranking may be provided along with the results. Block 705 may provide results in accordance with principles described in connection with Figs. 1-5.

Fig. 8 is a block diagram illustrating an exemplary video image searching system 800. The video image searching system 800 includes a video searching device 810 and a display 820. In one example, the device 810 and the display 820 may be connected by a physical link. In another example, the device 810 and the display 820 may communicate via a communication link, such as, for example a wireless network, a wired network, a short range communication network or a combination of different communication networks.

The display 820 may allow a user to interact with the video searching device 810, including, for example, inputting criteria for video searching. Some criteria may include textual, audio or video representation of the visual concept for which a search is performed. The display 820 may also display the results of the video search or may allow the user to otherwise interact with the video search. For example, the display 820 may allow the user to specify a textual query of a visual concept. The display 820 may display the video results from the video search. The display 820 may also allow a user to specify new videos to index.

The video searching device 810 further includes storage 830 and processor 840. Storage 830 and processor 840 may allow performance of Features Extractor 850, Fused Classification 860, and Video Searching Based on a Fused Classifier 870. Fused The video searching device 810 further includes any other software or hardware necessary the performance of video searching device 810, including in whole or in part Features Extractor 850, Fused Classification 860, and Video Searching Based on Combined Classifier 870. The storage 830 may store one or more of the photometric features, motion features, audio features and indexed video files. The processor may perform one or more of the feature extraction, classifier learning, fusion weight computation, and index searching in accordance with present principles.

In one example, the device 810 may perform Features Extractor 850, Fused Classification 860, and Video Searching Based on Fused Classifier 870, alone or in combination, in accordance with the processes described in Figs. 1-7. Each of the Features Extractor 850, Fused Classification 860, and Video Searching Based on Fused Classifier 870 may be executed in whole or in part on video searching device 810. Alternatively, each of the Features Extractor 850, Fused Classification 860, and Video Searching Based on Fused Classifier 870 may be performed remotely and their respective results may be communicated to device 810 via a communication link. The dashed boxes may indicate that each of the box processes may be executed on the device 810 or may be executed remotely.

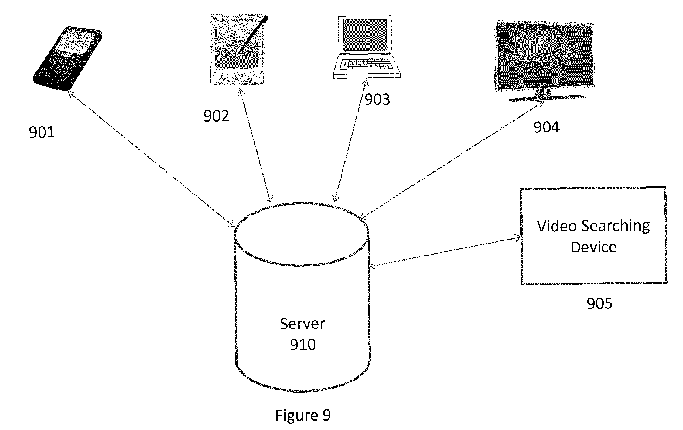

Fig. 9 illustrates an example of various video searching devices 901-905 and a server 910. The video searching devices may be a smartphone (e.g., device 901), a tablet (e.g., device 902), a laptop (e.g., device 903), a smart display such as a smart TV (e.g., device 904) or any other video searching device (e.g., device 905) that includes software and hardware to execute the features of the device 810 shown in Fig. 8. The video searching devices 901-905 may be similar to the video searching device 810 and the video searching system 800 described in connection with Fig. 8. The video searching processes described in accordance with Figs. 1-7 may be executed on any of the devices 901-905, on server 910, or in a combination of any of the devices 901-905 and server 910.

Numerous specific details have been set forth herein to provide a thorough understanding of the present principles. It will be understood by those skilled in the art, however, that the examples above may be practiced without these specific details. In other instances, well-known operations, components and circuits have not been described in detail so as not to obscure the present principles. It can be appreciated that the specific structural and functional details disclosed herein may be representative and do not necessarily limit the scope of the present principles.

Various examples of the present principles may be implemented using hardware elements, software elements, or a combination of both. Some examples may be implemented, for example, using a computer-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The computer-readable medium or article may include, for example, any suitable type of memory unit, memory device, memory article, memory medium, storage device, storage article, storage medium and/or storage unit. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

**Claims**

1. A method for searching a plurality of videos comprising
   receiving a search query;
   determing at least a first classifier from a training set determined from a first plurality of features determined based on the search query;
   determining a first scored plurality of videos based on the first classifier and a plurality of videos;
   determining at least a second plurality of features based on the first scored plurality of videos;
   determining at least a second classifier from a training set determined from the at least a second plurality of features;
   determining a fused classifier based on the first classifier and the at least a second classifier;
   determining a second scored plurality of videos based on the fused classifier and the plurality of videos;
   providing for display the second scored plurality of videos;
   wherein the first plurality of features are determined based on a first search utilizing the search query;
   wherein the first plurality of features are each of a first type video feature and wherein the at least second plurality of features are each of at least a second type video features;
   wherein the first type of video feature is different than the at least a second type of video feature.

2. An apparatus for performing a search for plurality of videos comprising
   a means for receiving a search query;
   a means for determining at least a first classifier from a training set determined from a first plurality of features determined based on the search query, determine a first scored plurality of videos based on the first classifier and a plurality of videos, determine at least a second plurality of features based on the first scored plurality of videos; determine at least a second classifier from a training set determined from the at least a second plurality of features, determine a fused classifier based on the first classifier and the at least a second classifier, determine a second scored plurality of videos based on the fused classifier and the plurality of videos, the processor providing for display the second plurality of videos;
   wherein the first plurality of features are determined based on a first search utilizing the search query;
   wherein the first plurality of features are each of a first type video feature and wherein the at least second plurality of features are each of at least a second type video features;
   wherein the first type of video feature is different than the at least a second type of video feature.

3. The method of claim 1 or the apparatus of claim 2, wherein the first type of video feature is a photometric feature.

4. The method of claim 1 or the apparatus of claim 2, wherein the at least a second type of video feature is at least one selected from a group of video motion feature and video audio feature.

5. The method or apparatus of claim 3, wherein the at least a second type of video feature is a motion video feature and an audio video feature.

6. The method of claim 1 or apparatus of claim 2, wherein the first classifier is determined based on an on-the-fly search.

7. The method of claim 1 or apparatus of claim 2, further comprising providing the first plurality of videos for user feedback, determining a modified first plurality of videos based on the user feedback, and determining the at least a second classifier based on the modified first plurality of videos.

8. The method of claim 1 or apparatus of claim 2, further comprising displaying the second plurality of videos and key frames of the second plurality of videos corresponding to the search query.

9. The method of claim 1 or apparatus of claim 2, further comprising providing the second plurality of videos for user verification, determining a modified second plurality of videos based on the user feedback, and providing for display the modified second plurality of videos.

10. The method of claim 1 or apparatus of claim 2, wherein the search is performed remotely and the first plurality of features is provided from the remotely performed search.

**11.** The method of claim 1 or apparatus of claim 2, wherein the second plurality of features are extracted prior to performance of the search and are selected based on the first plurality of videos.

**12.** The method of claim 1 or apparatus of claim 2, wherein the second type of features are temporal features.

**13.** The method of claim 1 or apparatus of claim 2, wherein the second plurality of features is prestored.

**14.** The method or apparatus of claim 13, wherein the prestored second plurality of features is indexed.

**15.** The method of claim 9, further comprising determining a third plurality of features based on the user verified second plurality of videos; determining a third classifier from a training set determined from the third plurality of features; determining a fused classifier based on the first classifier, the at least a second classifier, and the third classifier; determining a third scored plurality of videos based on the fused classifier and the plurality of videos.

FIGURE 1

FIGURE 2

## Photometric features

301

302  Video frame, time *t*    FIGURE 3A

306

## Motion features

310

311

Displacement vectors
between frames *(t-1)* and *t*    FIGURE 3B

## Audio features

Overlapping temporal windows of the
audio track, each centered at times t-2, t-1,
t, t+1, and t+2

316    FIGURE 3C

315

Generic
negative
features
405

| Receive Query Input 401 | Image Searcher 402 | Photometric features extractor 403 | Classifier Learner $c_p()$ 406 | Apply classifier to video database 407 | Retrieved videos 408 |

Positive
features
404

$f_p$
409

Video
database
410

400

FIGURE 4

FIGURE 5

FIGURE 6A

600

$f_p$, $f_m$, $f_a$ for
frame at time $t$
601

$c_p()$, $c_m()$, $c_a()$
603

Compute and concatenate
classification scores
602

$[\ c_p(f_p),\ c_m(f_m),\ c_a(f_a)\ ]^\top$
604

Concatenated scores for
training positive videos
611

Concatenated scores for
training negative videos
612

Learning algorithm
613

$w_f$ and $b_f$
614

610

FIGURE 6B

Classifiers (e.g,
$c_a()$, $c_p()$, $c_m()$ )
and fusion
weights w

```
┌─────────────┐
│     f_p     │
│     606     │
└─────────────┘

┌─────────────┐
│     f_m     │
│     607     │
└─────────────┘

┌─────────────┐
│     f_a     │
│     608     │
└─────────────┘

┌─────────────┐
│    Video    │
│  database   │
│     690     │
└─────────────┘
```

For each feature
triplet $f_p$, $f_m$, $f_a$,
compute fused
score $\mathbf{w}^T\mathbf{g} + b$
650

Sort video key
frames based on
fused score
651

FIGURE 6C

Receive Query
701

Determine Initial Video Set
702

Determine Classifiers for
Additional Video Temporal
Features Based on the
Initial Video Set
703

Determine fused classification
score for each video based on
all classifiers
704

Output ranked results
705

700

Figure 7

810

800

Features (e.g., Photometric, Motion, Audio) Extractor
850

Video Searching Based on Fused Classifier
870

Fused Classification
860

Display

820

Storage
830

Processor

840

Figure 8

901

902

903

904

Video Searching
Device

905

Server
910

Figure 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/255755 A1 (YAHOO! INC.) 1 November 2007 (2007-11-01) * paragraph [0008] - paragraph [0009] * * figure 2 * * paragraph [0047] - paragraph [0048] * * paragraph [0030] - paragraph [0031] * | 1-15 | INV. G06F17/30 G06K9/62 |
| X | WO 2007/091243 A2 (MOBIXELL NETWORKS LTD [IL]; SHATZ AMIR [IL]; WEXLER YOSEF [IL]; COHEN) 16 August 2007 (2007-08-16) * page 2, line 29 - page 3, line 24 * * page 5, line 9 - page 6, line 32 * | 1-15 | |
| X | EP 2 657 884 A2 (DOLBY LAB LICENSING CORP [US]) 30 October 2013 (2013-10-30) * page 2, paragraph 7 - page 3, paragraph 10; figures 1,5 * * paragraph [0036] - paragraph [0042] * | 1-15 | |
| A | YINING DENG ET AL: "Content-based search of video using color, texture, and motion", PROCEEDINGS / INTERNATIONAL CONFERENCE ON IMAGE PROCESSING : OCTOBER 26 - 29, 1997, SANTA BARBARA, CALIFORNIA, IEEE COMPUT. SOC, LOSALAMITOS, CALIF. [U.A.], 26 October 1997 (1997-10-26), pages 534-537, XP010253870, DOI: 10.1109/ICIP.1997.638826 ISBN: 978-0-8186-8183-7 * the whole document * | 1-15 | TECHNICAL FIELDS SEARCHED (IPC) G06F G06K |
| A | US 8 452 778 B1 (SONG YANG [US] ET AL) 28 May 2013 (2013-05-28) * the whole document * | 1-15 | |

-/--

The present search report has been drawn up for all claims

| Place of search | Date of completion of the search | Examiner |
|---|---|---|
| The Hague | 2 November 2015 | Papanikolaou, N |

EPO FORM 1503 03.82 (P04C01)

Europäisches
Patentamt

European
Patent Office

Office européen
des brevets

## EUROPEAN SEARCH REPORT

Application Number

EP 15 30 5780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/149693 A1 (OTSUKA ISAO [JP] ET AL) 6 July 2006 (2006-07-06) * the whole document * | 1-15 | |
| A | US 8 396 286 B1 (ARADHYE HRISHIKESH [US] ET AL) 12 March 2013 (2013-03-12) * the whole document * | 1-15 | |
| A | WO 2006/022394 A2 (MITSUBISHI ELECTRIC CORP [JP]; XIONG ZIYOU [US]; RADHAKRISHNAN REGUNAT) 2 March 2006 (2006-03-02) * the whole document * | 1-15 | |

TECHNICAL FIELDS
SEARCHED (IPC)

The present search report has been drawn up for all claims

| Place of search | Date of completion of the search | Examiner |
|---|---|---|
| The Hague | 2 November 2015 | Papanikolaou, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5780

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2015

| Patent document cited in search report | | Publication date | Patent family member(s) | | Publication date |
|---|---|---|---|---|---|
| US 2007255755 | A1 | 01-11-2007 | NONE | | |
| WO 2007091243 | A2 | 16-08-2007 | US 2009083228 A1 | | 26-03-2009 |
| | | | WO 2007091243 A2 | | 16-08-2007 |
| EP 2657884 | A2 | 30-10-2013 | EP 2657884 A2 | | 30-10-2013 |
| | | | US 2013279740 A1 | | 24-10-2013 |
| US 8452778 | B1 | 28-05-2013 | NONE | | |
| US 2006149693 | A1 | 06-07-2006 | CN 101023467 A | | 22-08-2007 |
| | | | EP 1789952 A1 | | 30-05-2007 |
| | | | JP 2008527397 A | | 24-07-2008 |
| | | | US 2006149693 A1 | | 06-07-2006 |
| | | | WO 2006073032 A1 | | 13-07-2006 |
| US 8396286 | B1 | 12-03-2013 | NONE | | |
| WO 2006022394 | A2 | 02-03-2006 | EP 1743265 A2 | | 17-01-2007 |
| | | | JP 2008511186 A | | 10-04-2008 |
| | | | US 2006059120 A1 | | 16-03-2006 |
| | | | WO 2006022394 A2 | | 02-03-2006 |

EPO FORM P0459

For more details about this annex : see Official Journal of the European Patent Office, No. 12/82